# EUROPEAN PATENT APPLICATION

(11) **EP 4 527 675 A1**
(43) Date of publication of application: **26.03.2025**
(21) Application number: 23831352.2
(22) Date of filing: 26.06.2023
(51) Int. Cl.: B60L 50/70, B60L 58/30, H01M 8/00, H01M 8/04303, H01M 8/04858, H01M 8/04955

(54) **WORK VEHICLE, WORK VEHICLE CONTROL DEVICE, AND CONTROL METHOD**

(30) Priority: 28.06.2022 JP 2022103773
(71) Applicant: Kubota Corporation, Osaka 556-8601 (JP)
(72) Inventor: HAYASHI, Yosuke, Sakai-shi, Osaka 590-0908 (JP); MINAMIDE, Yuki, Sakai-shi, Osaka 590-0908 (JP); AMITANI, Kodai, Sakai-shi, Osaka 590-0908 (JP); TAKAKI, Takahiro, Sakai-shi, Osaka 590-0908 (JP); IWAMI, Kenichi, Sakai-shi, Osaka 590-0908 (JP); SAKANO, Tomoyoshi, Sakai-shi, Osaka 590-0908 (JP); TAKAKI, Go, Sakai-shi, Osaka 590-0908 (JP)
(74) Representative: Cabinet Beau de Loménie
(86) International application number: PCT/JP2023/023488
(87) International publication number: WO 2024/004910

(57) **Abstract**

A work vehicle includes a fuel cell module including a fuel cell stack, at least one fuel tank to store fuel to be supplied to the fuel cell stack, a motor connected to the fuel cell module, a travel device drivable by the motor, a power take-off shaft drivable by the motor and to which an implement is connected, and a controller. In response to an operation stop command, the controller stops supply of the fuel or the oxidizing gas to the fuel cell module, and then rotates the motor with power transmission from the motor to the travel device halted, thus discharging residual charge in circuitry connected to the motor.

## Description

### TECHNICAL FIELD

The present disclosure relates to work vehicles, work vehicle controllers, and control methods.

### BACKGROUND ART

In the field of motor vehicles, where the main purpose is to transport "people" or "objects," electric vehicles (EVs) are becoming increasingly popular. In these vehicles, the driving force (traction) is generated by an electric motor (hereinafter referred to as "motor") instead of an internal combustion engine.

On the other hand, there is a need to reduce the amount of carbon dioxide (CO₂) emitted by work vehicles, such as tractors used in agricultural fields, to realize a decarbonized society. Unlike typical automobiles, work vehicles such as tractors need to tow implements, which are work machines, to perform agricultural tasks such as plowing. Therefore, to achieve the electrification of work vehicles, there are issues to be solved that differ from those of passenger cars.

Patent Document 1 discloses a tractor that includes a fuel cell (FC) power generation system and a motor, while maintaining the structure of a conventional engine-driven tractor with minimal alteration.

Patent Document 2 discloses a vehicle equipped with a fuel cell system. This vehicle performs a discharge process to consume the residual electric charge remaining in the high-voltage system installed in the vehicle when the ignition is turned OFF to power down the entire vehicle system. The residual electric charge in the high-voltage system is the charge remaining in the circuitry, excluding the storage battery, and may be, for example, charge remaining in capacitors included in the circuitry. In the discharge process, the charge is consumed by a heater that heats water in a water tank that stores water generated by fuel cell power generation.

### CITATION LIST

### PATENT LITERATURE

[Patent Document 1] Japanese Laid-Open Patent Publication No. 2002-225577
[Patent Document 2] Japanese Laid-Open Patent Publication No. 2022-46376

### SUMMARY OF INVENTION

### TECHNICAL PROBLEM

The present disclosure provides techniques for efficiently discharging residual electric charge when operation is stopped in a work vehicle equipped with a fuel cell module.

### SOLUTION TO PROBLEM

A work vehicle according to one aspect of the present disclosure, in an exemplary and non-limiting embodiment, includes a fuel cell module including a fuel cell stack, at least one fuel tank to store fuel to be supplied to the fuel cell stack, a motor connected to the fuel cell module, a travel device drivable by the motor, a power take-off shaft drivable by the motor and configured to connect an implement, and a controller. The controller is configured, in response to an operation stop command, to stop supply of fuel or oxidizing gas to the fuel cell module, and then to rotate the motor with power transmission from the motor to the travel device halted, so as to discharge residual electric charge in circuitry connected to the motor.

Comprehensive or specific aspects of this disclosure may be implemented using apparatuses, systems, methods, integrated circuits, computer programs, or computer-readable non-transitory storage media, or any combination thereof. The computer-readable storage media may be inclusive of volatile storage media or non-volatile storage media. The apparatuses may include multiple devices. In the case where the apparatuses include two or more devices, these two or more devices may be provided within a single piece of equipment or may be separately provided in two or more pieces of equipment.

### ADVANTAGEOUS EFFECTS OF INVENTION

According to embodiments of this disclosure, discharging residual charge can be effectively performed when operation is stopped.

### BRIEF DESCRIPTION OF DRAWINGS

[FIG. **1**] A plan view schematically showing a basic configuration example of a work vehicle according to this disclosure.
[FIG. **2**] A diagram showing a basic configuration example of a fuel cell power generation system mounted on the work vehicle.
[FIG. **3**] A block diagram schematically showing an example of electrical connections and power transmission between components of the work vehicle according to this disclosure.
[FIG. **4**] A block diagram schematically showing paths of electrical signals (thin solid lines) and coolant paths (dotted lines) between components in the work vehicle according to this disclosure.
[FIG. **5**] A perspective view schematically showing a configuration example of a work vehicle in an embodiment of this disclosure.
[FIG. **6**] A side view schematically showing a configuration example of a work vehicle in an embodiment of this disclosure.
[FIG. **7**] A flowchart showing an example of a discharge process of the work vehicle.
[FIG. **8**] A flowchart showing another example of a discharge process of the work vehicle.
[FIG. **9**] A flowchart showing yet another example of a discharge process of the work vehicle.

### DESCRIPTION OF EMBODIMENTS

The following describes embodiments of the present disclosure. However, excessively detailed explanations may be omitted. For example, detailed explanations of well-known matters and repetitive explanations of substantially identical configurations may be omitted. This is to avoid the following description from becoming unnecessarily redundant and to facilitate understanding by those skilled in the art. The inventors provide the attached drawings and the following description to enable those skilled in the art to fully understand this disclosure, and do not intend to limit the subject matter described in the claims by these drawing and description. In the following description, the same reference numerals are used for components with the same or similar functions.

The following embodiments are illustrative and not limiting. The technologies disclosed herein are not restricted to the following embodiments. For instance, the numerical values, shapes, materials, steps, the order of those steps, screen layouts, and other elements shown in the following embodiments are merely examples. Various modifications can be made as long as no technical contradictions arise. Additionally, different feature, elements, characteristics, etc., of the example embodiments may be combined as long as there are no technical contradictions.

In this disclosure, the term "work vehicle" refers to a vehicle used to perform a task at a work site. A "work site" includes any place where work is carried out, such as a field, forest, or construction site. A "field" refers to any place where agricultural work is performed, such as an orchard, farm, paddy field, grain farm, or pasture. A work vehicle may include an agricultural machine such as a tractor, rice planter, combine harvester, vehicle for crop management, or riding mower, as well as a non-agricultural vehicle such as a construction work vehicle or snowplow. The work vehicles described in this disclosure may be equipped with an implement (also called a "work machine" or "work device") attached to at least one of its front and rear portions, depending on the nature of the work. Travel of a work vehicle while performing a task may be referred to as "tasked travel."

An "agricultural machine" refers to a machine for agricultural application. Examples of agricultural machines include tractors, harvesters, rice planters, vehicles for crop management, vegetable transplanters, mowers, seeders, spreaders, and agricultural mobile robots. Not only may a work vehicle such as a tractor function as an "agricultural machine" on its own, but also the entire combination of a work vehicle and an implement attached to or towed by the work vehicle may function as an "agricultural machine." An agricultural machine performs agricultural work on the ground in a field, such as tilling, seeding, pest control, fertilizing, planting crops, or harvesting.

### 1. <Basic Configuration of Work Vehicle>

An example of the basic configuration and operation of a work vehicle according to this disclosure will be described. The work vehicle described below includes a motor and a fuel cell power generation system (hereinafter referred to as "FC power generation system") that generates the power necessary to drive the motor.

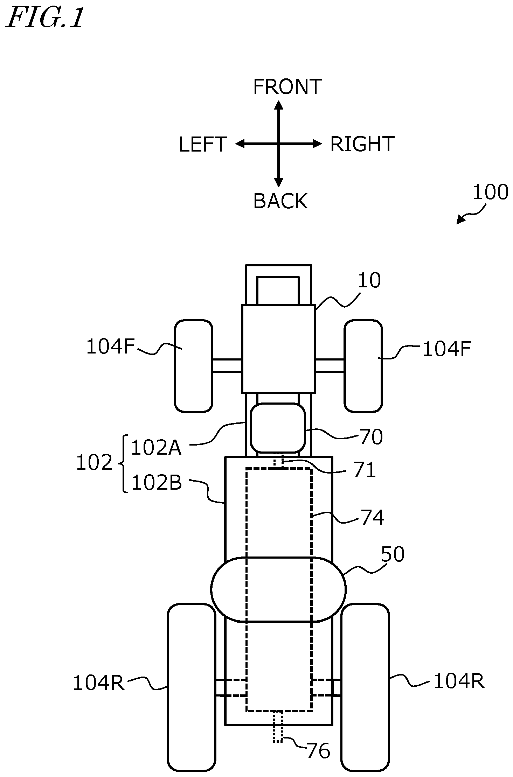

FIG. **1** is a schematic plan view showing an example of the basic configuration of a work vehicle **100** according to this disclosure. In this disclosure, the direction in which the work vehicle **100** travels straight forward is referred to as the "forward direction," and the direction in which it travels straight backward is referred to as the "backward direction." In a plane parallel to the ground, the direction extending perpendicularly to the right of the "forward direction" is referred to as the "right direction," and the direction extending perpendicularly to the left is referred to as the "left direction." In FIG. **1**, the "forward direction," "backward direction," "right direction," and "left direction" are indicated by arrows labeled "front," "back," "right," and "left" respectively. Both the forward and backward directions may be collectively referred to as the "front-back direction."

The work vehicle **100** illustrated in this example is, for instance, a tractor, which defines and functions as an example of agricultural machinery. The technologies disclosed herein are not limited to work vehicles such as tractors and may be applied to other types of work vehicles. The work vehicle **100** is configured to attach or tow an implement and travel within a field while performing agricultural tasks appropriate to the type of implement. Additionally, the work vehicle **100** is configured to travel both within and outside the field (including on roads) with the implement raised or without an implement attached.

The work vehicle **100,** like a conventional tractor, includes a vehicle frame (vehicle body) **102** that rotatably supports left and right front wheels **104F** and left and right rear wheels **104R.** The vehicle frame **102** includes a front frame **102A** where the front wheels **104F** are mounted, and a transmission case **102B** where the rear wheels **104R** are mounted. The front frame **102A** is fixed to the front portion of the transmission case **102B.** The front wheels **104F** and rear wheels **104R** may be collectively referred to as wheels **104.** Strictly speaking, the wheels **104** refer to wheel rims with tires attached. In this disclosure, the term "wheel" generally refers to the entire assembly of the "wheel rim and tire." Either or both of the front wheels **104F** and rear wheels **104R** may be replaced with a plurality of wheels equipped with endless tracks (crawlers) instead of wheels with tires. In this specification, the term "travel device" may collectively refer to the left and right front wheels **104F** and left and right rear wheels **104R,** the axles that rotate these four wheels, and the braking devices (brakes) that apply braking to each axle.

In the example shown in FIG. **1****,** the work vehicle **100** includes a fuel cell module (FC module) **10** and a motor **70,** which are directly or indirectly supported by the front frame **102A.** The FC module **10** includes a fuel cell stack (FC stack) and functions as an onboard power generator that generates electricity from fuel, as will be described later. Hereinafter, the terms "FC module" or "FC stack" may simply be referred to as "fuel cell."

The motor **70** is electrically connected to the FC module **10.** The motor **70** converts the electric power generated by the FC module **10** into mechanical motion (power) to produce the driving force (traction) necessary for the work vehicle **100** to travel. An example of the motor **70** is an AC synchronous motor. Since the FC stack of the FC module **10** generates direct current, when the motor **70** is an AC synchronous motor, a group of electrical circuits, including an inverter device, is installed between the FC stack and the motor **70** to convert the direct current to alternating current. A portion of such electrical circuit group may be inside the FC module **10,** while another portion of the electrical circuit group may be attached to the motor **70** as a motor drive circuit.

The motor **70** includes an output shaft **71** that rotates. The torque of the output shaft **71** is transmitted to the rear wheels **104R** through mechanical parts such as a transmission (gearbox) and a rear wheel differential gear device installed inside the transmission case **102B.** In other words, the power generated by the motor **70,** which serves as the power source, is transmitted to the rear wheels **104R** through a power transmission system (drivetrain) **74** including the transmission installed in the transmission case **102B.** For this reason, the "transmission case" may also be referred to as a "mission case." In four-wheel drive mode, a portion of the power of the motor **70** is also transmitted to the front wheels **104F.** The power of the motor **70** may be used not only to drive the work vehicle **100** but also to operate implements. Specifically, a power take-off (PTO) shaft **76** is provided at the rear end of the transmission case **102B.** The PTO shaft **76** is drivable by the motor **70** and is configured to be connected to an implement. The torque from the output shaft **71** of the motor **70** is transmitted to the PTO shaft **76.** Implements attached to or towed by the work vehicle **100** is configured to receive power from the PTO shaft **76** to perform various work-related operations. The motor **70** and the power transmission system **74** may collectively be referred to as an electric powertrain.

Thus, the work vehicle **100** disclosed herein does not includes an internal combustion engine such as a diesel engine, but includes the FC module **10** and the motor **70.** Additionally, the output shaft **71** of the motor **70** is mechanically coupled to the power transmission system **74,** including the transmission in the transmission case **102B.** The motor **70** efficiently generates torque over a relatively wide range of rotational speeds compared to an internal combustion engine. However, by utilizing the power transmission system **74,** including the transmission, it becomes easier to adjust the torque and rotational speed from the motor **70** over an even wider range by performing multi-stage or continuously variable speed change operations. This configuration allows for efficient execution of not only the travel of the work vehicle **100** but also various operations using implements.

Depending on the application or size of the work vehicle **100,** some functions of the power transmission system **74** may be omitted. For example, a portion or an entirety of the transmission responsible for speed change functions may be omitted. The number and mounting position of motors **70** are also not limited to the example shown in FIG. **1****.**

The work vehicle **100** includes at least one fuel tank **50** that stores fuel to be supplied to the FC module **10.** For simplicity, FIG. **1** shows one fuel tank **50.** In some embodiments, a plurality of fuel tanks **50** may be housed in a tank case to define a fuel tank module. The fuel tank **50** is supported by structural elements fixed to the vehicle frame **102A** described later. The FC module **10** and the fuel tank **50** are connected by piping and open/close valves, and similar components, defining an FC power generation system mounted on a vehicle. The configuration and operation of the FC power generation system will be described later.

The work vehicle **100** in the embodiments described later includes a seat for a driver, hereinafter referred to as "a driver seat," supported by the vehicle frame **102.** The driver seat may be enclosed by a cabin supported by the vehicle frame **102.** In the embodiments described later, the FC module **10** is positioned in front of the driver seat, and the fuel tank **50** is positioned above the driver seat. Such FC module **10** and fuel tank **50** are housed in at least one "enclosure." The "enclosure" functions as a housing, for example, and plays a role in protecting the FC module **10** and fuel tank **50** from sunlight exposure and wind and rain. Additionally, such an enclosure is designed to control the spread of fuel gas into the atmosphere and to facilitate the detection of fuel gas when fuel gas leaks from the FC module **10** or fuel tank **50.**

The FC module **10** may be housed in a front housing called a "bonnet," for example. The front housing is a portion of the "enclosure." The front housing is supported by the front portion of the vehicle frame **102** (front frame **102A**). The fuel tank **50** is housed in a tank case, as mentioned earlier. The tank case is directly or indirectly supported by the vehicle frame **102.**

### 2. <FC Power Generation System>

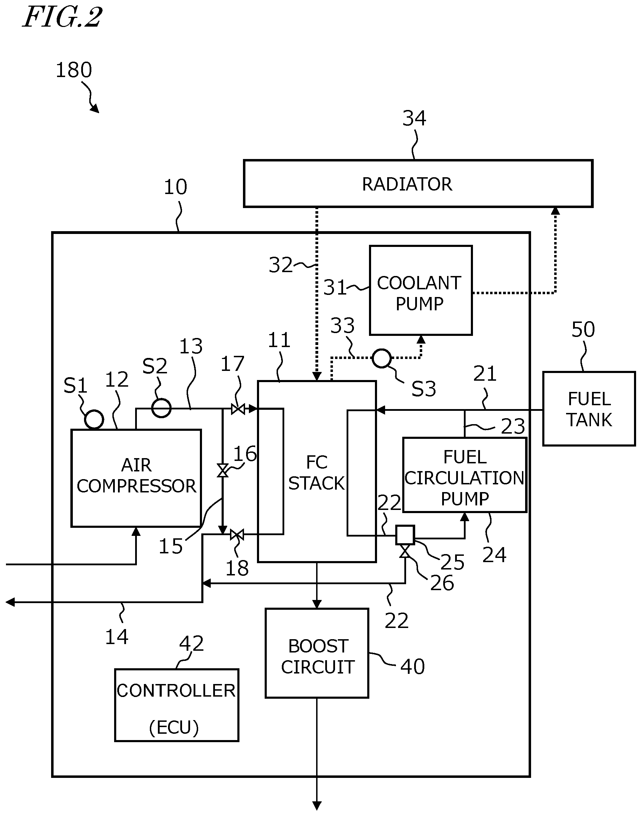

Next, referring to FIG. **2****,** a basic configuration example of the FC power generation system **180** mounted on the work vehicle **100** will be explained.

The FC power generation system **180** shown in FIG. **2** functions as an onboard power generation system in the work vehicle **100** of FIG. **1****.** The electric power generated by the FC power generation system **180** is used not only for the travel of the work vehicle **100** but also for the operation of implements towed or attached to the work vehicle **100.**

The FC power generation system **180** in the illustrated example includes the FC module **10** and at least one fuel tank **50** that stores fuel to be supplied to the FC module **10.** The FC power generation system **180** also includes a radiator device **34** to cool the FC module **10.**

The FC module **10** includes main components such as a fuel cell stack (FC stack) **11,** an air compressor **12,** a fuel circulation pump **24,** a coolant pump **31,** a boost circuit **40,** and a controller **42.** These components are housed within the casing of the FC module **10** and are connected to each other through electrical or fluid communication.

The FC stack **11** generates electric power through an electrochemical reaction between the fuel, referred to as "anode gas" and the oxidizing gas, referred to as "cathode gas." In this example, the FC stack **11** includes polymer electrolyte fuel cells. The FC stack **11** has a stack structure in which a plurality of single cells (fuel cells elements) are stacked. A single cell includes, for example, an electrolyte membrane including an ion exchange membrane, an anode electrode on one side of the electrolyte membrane, a cathode electrode on the other side of the electrolyte membrane, and a pair of separators sandwiching the anode electrode and cathode electrode on both sides. The voltage generated in a single cell is, for example, less than 1 volt. Therefore, in the FC stack **11,** for instance, more than 300 single cells are connected in series to generate a voltage of several hundred volts.

Anode gas is supplied to the anode electrode of the FC stack **11.** The anode gas is called "fuel gas" or simply "fuel." In the embodiments of this disclosure, the anode gas (fuel) is hydrogen gas. Cathode gas is supplied to the cathode electrode. The cathode gas is an oxidizing gas such as air. The anode electrode is called the fuel electrode, and the cathode electrode is called the air electrode.

At the anode electrode, the electrochemical reaction shown in the following equation (1) occurs.

2H₂ → 4H⁺ + 4e ... equation (1)

At the cathode electrode, the electrochemical reaction shown in the following equation (2) occurs.

4H⁺ + 4e + O₂ → 2H₂O ... equation (2)

Overall, the reaction shown in the following equation (3) occurs.

2H₂ + O₂ → 2H₂O ... equation (3)

The anode gas after being used in the above reaction is called "anode off-gas", and the cathode gas after being used in the reaction is called "cathode off-gas."

The air compressor **12** supplies air taken from the outside as cathode gas to the cathode electrode of the FC stack **11.** The cathode gas supply system including the air compressor **12** includes a cathode gas supply pipe **13,** a cathode off-gas pipe **14,** and a bypass pipe **15.** The cathode gas supply pipe **13** flows cathode gas (air) supplied from the air compressor **12** to the cathode electrode of the FC stack **11.** The cathode off-gas pipe **14** flows cathode off-gas discharged from the FC stack **11** to the outside air. The bypass pipe **15** branches from the cathode gas supply pipe **13** downstream of the air compressor **12,** bypasses the FC stack **11,** and connects to the cathode off-gas pipe **14.** A control valve **16** is provided on the bypass pipe **15** to adjust the flow rate of cathode gas flowing through the bypass pipe **15.** A shut-off valve **17** is provided on the cathode gas supply pipe **13** to selectively block the inflow of cathode gas to the FC stack **11.** A pressure regulating valve **18** is provided on the cathode off-gas pipe **14** to adjust the back pressure of the cathode gas.

The cathode gas supply system of the FC module **10** includes a rotation speed detection sensor **S1** that detects the rotation speed of the air compressor **12** and a gas flow rate detection sensor **S2** that detects the flow rate of cathode gas flowing through the cathode gas supply pipe 13. The control valve **16,** shut-off valve **17,** and pressure regulating valve **18** are, for example, electromagnetic valves.

The fuel circulation pump **24** supplies fuel gas (anode gas) sent from the fuel tank **50** to the anode electrode of the FC stack **11.** The anode gas supply system including the fuel circulation pump **24** includes an anode gas supply pipe **21,** an anode off-gas pipe **22,** and a circulation path **23.** The anode gas supply pipe **21** flows anode gas supplied from the fuel tank **50** to the anode electrode of the FC stack **11.** In the embodiments of this disclosure, the fuel tank **50** is a hydrogen tank that stores high-pressure hydrogen gas.

The anode off-gas pipe **22** flows anode off-gas discharged from the FC stack **11.** The anode off-gas is led through the anode off-gas pipe **22** to a gas-liquid separator **25** in which moisture is removed. The anode off-gas with moisture removed returns to the anode gas supply pipe **21** through the circulation path **23** by the fuel circulation pump **24.** The anode off-gas circulating through the circulation path **23** can be discharged through the anode off-gas pipe **22** by opening an exhaust valve **26.** Moisture accumulated in the gas-liquid separator **25** can be discharged through the anode off-gas pipe **22** by opening the exhaust valve **26.** The exhaust valve **26** is, for example, an electromagnetic valve. In the example shown in the figure, the anode off-gas pipe **22** is connected to the cathode off-gas pipe **14.** By adopting this configuration, it is possible to improve the utilization efficiency of the anode gas by circulating the anode off-gas containing unreacted anode gas that did not contribute to the electrochemical reaction and supplying it again to the FC stack **11.**

To enhance the performance of the FC stack **11,** temperature control is important. When generating electricity through the reaction of producing water from hydrogen gas and oxygen gas, heat is also generated, necessitating cooling. FIG. **2** shows a coolant circulation system including a coolant pump **31** for the FC stack **11,** but as described later, cooling circulation systems for other electrical equipment may also be provided. Note that the air compressor **12,** fuel circulation pump **24,** and coolant pump **31** included in the FC module **10** are drivable by individual built-in motors. These motors are also electrical equipment.

The coolant circulation system including the coolant pump **31** shown in FIG. **2** includes a coolant supply pipe **32,** a coolant discharge pipe **33,** a radiator device **34,** and a temperature sensor **S3.** This coolant circulation system is configured to adjust the temperature of the FC stack **11** within a predetermined range by circulating coolant through the FC stack **11.** The coolant is supplied to the FC stack **11** through the coolant supply pipe **32.** The supplied coolant flows through a coolant path between single cells and is discharged into the coolant discharge pipe **33.** The coolant discharged into the coolant discharge pipe **33** flows to the radiator device **34.** The radiator device **34** performs heat exchange between the incoming coolant and the outside air to release heat from the coolant, and then resupplies the cooled coolant to the coolant supply pipe **32.**

The coolant pump **31** is provided on either the coolant supply pipe **32** or the coolant discharge pipe **33** to pump coolant to the FC stack **11.** A coolant bypass flow path may be provided between the coolant discharge pipe **33** and the coolant supply pipe **32.** In that case, a flow dividing valve is provided at the branching point at which the coolant bypass flow path branches from the coolant discharge pipe **33.** The flow dividing valve is configured to adjust the flow rate of coolant flowing through the bypass flow path. The temperature sensor **S3** detects the temperature of the coolant flowing through the coolant discharge pipe **33.**

The coolant used to cool the FC stack **11** is circulated through the flow path by an electric coolant pump **31.** A coolant control valve may be provided downstream of the FC stack **11.** The coolant control valve adjusts the ratio of coolant flowing to the radiator device **34** and coolant bypassing the radiator device **34,** enabling more accurate control of the coolant temperature. Furthermore, by controlling the liquid delivery amount by the coolant pump, it is also possible to control the coolant temperature difference between the inlet and outlet of the FC stack **11** to be within a desired range. The temperature of the coolant in the FC stack **11** may be controlled to be around 70°C, for example, which is a temperature where the power generation efficiency of the FC stack **11** is high.

The coolant flowing through the FC stack **11** preferably has higher insulation properties compared to the coolant used to cool ordinary electrical equipment. Since voltages exceeding 300 volts can occur in the FC stack **11,** increasing the electrical resistance of the coolant allows for the suppression of current leakage through the coolant or devices such as the radiator device **34.** The electrical resistance of the coolant may decrease as the coolant is used. This is because ions dissolve into the coolant flowing through the FC stack **11.** To remove such ions from the coolant and increase insulation property, it is desirable to place an ion exchanger in the coolant flow path.

The boost circuit **40** is configured to increase the voltage output by the FC stack **11** through power generation to a desired level. The subsequent stage of the boost circuit **40** is connected to the high-voltage electrical circuit including an inverter device for motor drive. The subsequent stage of the boost circuit **40** may also be connected in parallel to the low-voltage electrical circuit via a step-down circuit.

The controller **42** may include an electronic control unit (ECU) configured or programmed to control power generation by the FC module **10.** The controller **42** detects or estimates the operating state of the FC power generation system **180** based on signals output from various sensors. The controller **42** is configured or programmed to control power generation by the FC stack **11** by regulating the operation of the air compressor **12,** fuel circulation pump **24,** coolant pump **31,** and various valves, based on the operating state of the FC power generation system **180** and instructions output from a higher-level computer or other ECUs. The controller **42** includes, for example, a processor, a storage device, and an input/output interface.

In the following description, for simplicity, "anode gas" may be referred to as "fuel gas" or "fuel," and "anode gas supply pipe" may be referred to as "piping."

### 3. <Configuration Example of System of Work Vehicle>

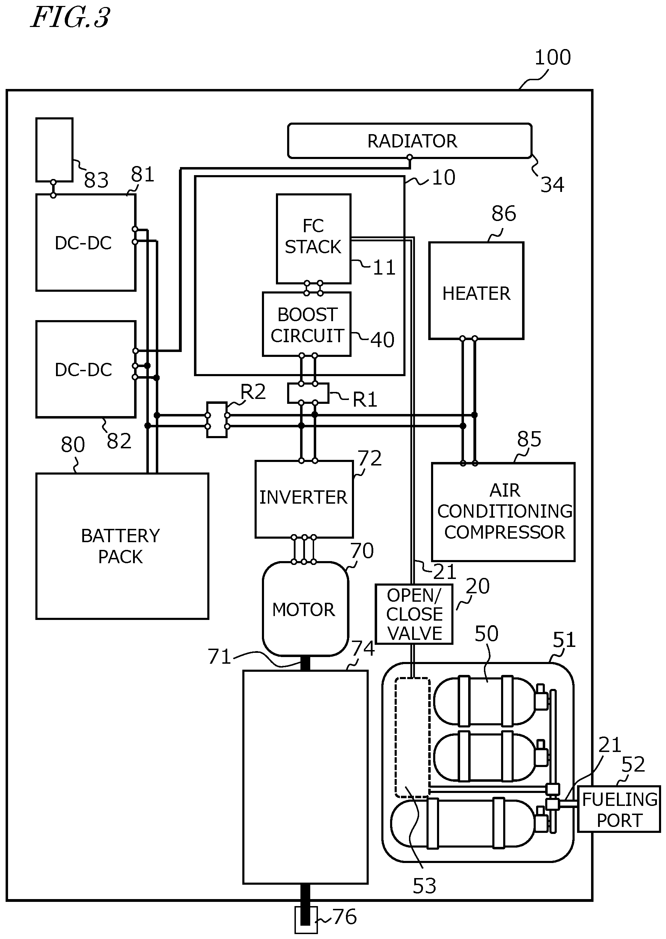

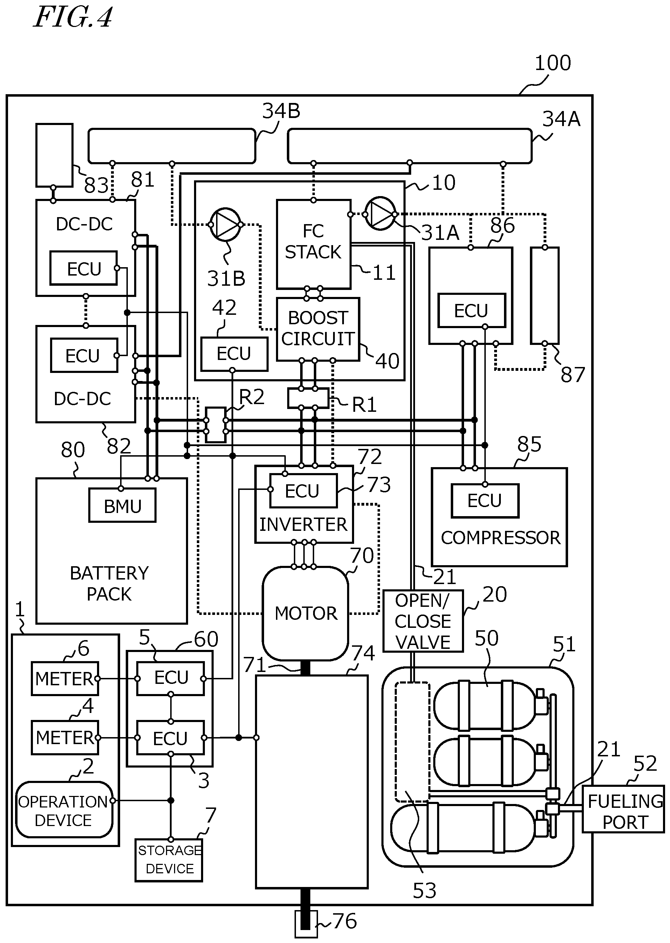

Next, referring to FIGS. **3** and **4****,** a configuration example of the system of the work vehicle **100** according to this disclosure will be described. FIG. **3** is a block diagram schematically showing an example of electrical connections and power transmission between components of the work vehicle **100** according to this disclosure. FIG. **4** is a block diagram showing a more detailed configuration than the example in FIG. **3****.** FIG. **4** schematically shows the paths of electrical signals (thin solid lines) and coolant (dotted lines) between components in the work vehicle **100.**

First, referring to FIG. **3****,** an example of the electrical connections and power transmission between components will be described. Electrical connections include both high-voltage and low-voltage systems. High-voltage electrical connections provide, for example, the power supply voltage for inverter devices. Low-voltage electrical connections provide, for example, the power supply voltage for electronic components that operate at relatively low voltages.

In the example shown in FIG. **3****,** the work vehicle **100** includes an FC module **10,** an inverter device **72,** a motor **70,** a power transmission system **74,** and a PTO shaft **76.** The DC voltage of the power generated in the FC stack **11** of the FC module **10** is boosted by the boost circuit **40** and then supplied to the inverter device **72.** The inverter device **72** converts the DC voltage into, for example, a three-phase AC voltage and supplies it to the motor **70.** The inverter device **72** has a bridge circuit (hereinafter also referred to as an "inverter circuit") including a plurality of power transistors. The motor **70** includes a rotating rotor and a stator with a plurality of coils electrically connected to the inverter device **72.** The rotor is coupled to the output shaft **71,** for example, via a reduction gear (speed reducer) or directly. The motor **70** rotates the output shaft **71** with torque and rotational speed controlled according to the waveform of the three-phase AC voltage from the inverter device **72.**

The inverter device **72** shown in FIG. **4** includes an ECU **73** for controlling the motor **70.** The ECU **73** controls the switching operation (turn-on or turn-off) of each of the plurality of power transistors included in the bridge circuit of the inverter device **72.** The ECU **73** may be connected to the plurality of power transistors in the bridge circuit via pre-drivers (which may be referred to as "gate drivers"). The ECU **73** may be configured to operate under the control of a higher-level computer such as the controller **60.**

The torque of the output shaft **71** of the motor **70** is transmitted to the power transmission system **74.** The power transmission system **74** operates with the motor **70** as the power source and drives the wheels **104R** and **104F** shown in FIG. **1****,** and/or the PTO shaft **76.** This power transmission system **74** may have a structure similar or analogous to the power transmission system in conventional tractors equipped with internal combustion engines such as diesel engines. By adopting a power transmission system used in agricultural tractors, for example, it is possible to reduce the design and manufacturing costs for producing an agricultural work vehicle **100** including an FC power generation system. The power transmission system **74** includes a travel power transmission mechanism to transmit power from the motor **70** to the left and right rear wheels **104R** through a clutch, transmission, and rear wheel differential device, and a PTO power transmission mechanism that transmits power from the motor **70** to the PTO shaft **76.** The power transmission system **74** includes a PTO clutch that switches between a state in which power is transmitted from the motor **70** to the PTO shaft **76** (engaged state) and a state in which it is not transmitted (disengaged state). The PTO clutch may be manually operated by the driver through the operation of an operation device, or switched by automatic control. The transmission case **102B** in FIG. **1** may be divided into a front case (mission case) housing clutches such as the PTO clutch and transmission and a rear case (differential gear case) housing the rear wheel differential device. The rear case may also be referred to as a rear axle case.

The work vehicle **100** includes a secondary battery (battery pack) **80** that temporarily stores electrical energy generated by the FC module **10.** An example of the battery pack **80** includes a pack of lithium-ion batteries. The battery pack **80** is electrically connected to the FC module **10** and electrically connected to the motor **70** via the inverter device **72.** The battery pack **80** can supply power to the inverter device **72** at the necessary timing in cooperation with the FC module **10** or independently. Various battery packs used in electric passenger vehicles may be adopted as the battery pack **80.** Hereinafter, the battery pack **80** may be simply referred to as "battery **80".**

The work vehicle **100** includes various electrical equipment (onboard electronic components) that operates on electricity, in addition to the motor **70** and the inverter device **72.** Examples of electrical equipment include electromagnetic valves such as open/close valves **20,** air cooling fans of the radiator device **34,** electric pumps of air conditioning compressors **85,** and temperature controllers for heating or cooling the FC stack **11.** The temperature controllers include electric heaters **86.** A first and a second DC-DC converter **81** and **82** to obtain appropriate power supply voltages for the operation of electrical equipment, and storage batteries **83** may also be included in the electrical equipment. Furthermore, various electronic components not shown (such as lamps, electric motors for hydraulic systems) may be included in the electrical equipment. The electrical equipment may be electronic components similar to electrical equipment installed in conventional agricultural tractors.

In the example of FIG. **3****,** the first DC-DC converter **81** is a circuit that steps down the voltage output from the boost circuit **40** of the FC module **10** to a first voltage, for example, 12 volts. The storage battery **83** is, for example, a lead-acid battery and stores electrical energy at the voltage output from the first DC-DC converter **81.** The storage battery **83** may be used as a power source for various electrical equipment such as lamps.

The work vehicle **100** shown in FIG. **3** includes not only the first DC-DC converter **81** but also a second DC-DC converter **82** as a voltage conversion circuit that steps down the high voltage output by the FC module **10.** The second DC-DC converter **82** is a circuit that steps down the voltage output from the boost circuit **40** of the FC module **10** (for example, several hundred volts) to a second voltage higher than the first voltage, for example, 24 volts. The air cooling fan of the radiator device **34,** for example, is configured to operate on the voltage output from the second DC-DC converter **82.** Note that although the radiator device **34** is described as a single component in FIG. **3****,** one work vehicle **100** may include a plurality of radiator devices **34.** Additionally, the electric pump of the air conditioning compressor **85** and the electric heater **86** are configured to operate on the voltage output from the second DC-DC converter **82.**

The work vehicle **100** shown in FIG. **3** includes a temperature controller that cools or heats the FC stack **11** included in the FC power generation system. The operation of the temperature controller or alike requires relatively large power. The relatively high 24-volt voltage output by the second DC-DC converter **82** is applied to the temperature controller. In this embodiment, the temperature controller includes the radiator device **34** that releases heat from the coolant cooling the FC stack **11,** and the relatively high 24-volt voltage (second voltage) output by the second DC-DC converter **82** is applied to the radiator device **34.** The temperature controller includes a heater **86** that heats the FC stack **11.** The relatively high voltage output by the second DC-DC converter **82** may also be applied to the heater. The relatively high voltage output by the second DC-DC converter **82** may also be applied to air conditioning devices such as the air conditioning compressor **85.**

The work vehicle **100** may include a third voltage conversion circuit that converts the high voltage output by the FC module **10** to a third voltage higher than the second voltage. The third voltage is, for example, 48 volts. If the work vehicle **100** includes another motor in addition to the motor **70,** for example, the third voltage may be used as the power source for such other motors.

In an agricultural work vehicle including a fuel cell power generation system, in addition to the electrical equipment necessary for agricultural task, the agricultural work vehicle also includes electrical equipment necessary for the operation of fuel cell power generation, so the appropriate voltage magnitude may differ for each electrical equipment. According to the embodiments of this disclosure, it is possible to supply voltages of appropriate magnitudes.

In the example shown in FIG. **3****,** a plurality of fuel tanks **50** are housed in a single tank case **51.** The fuel tank **50** is connected to a supplying port (fueling port) **52** through which fuel is supplied from the outside. This connection is made via piping **21** for flowing fuel gas. The fuel tank **50** is also connected to the FC module **10** via piping **21,** which is equipped with an open/close valve **20.** When hydrogen is used as the fuel gas, the piping **21** may be formed from materials with high resistance to hydrogen embrittlement, such as austenitic stainless steel like SUS316L.

A valve space **53** is provided in the tank case **51,** and various valves including a pressure reducing valve are placed in this valve space **53.** Through various valves provided in the valve space **53,** the piping **21** connects the fuel tank **50** and the FC module **10.** Fuel gas with reduced pressure by the pressure reducing valve flows through the piping **21** connecting the tank case **51** and the FC module **10.** When the fuel gas is hydrogen gas, high-pressure hydrogen gas of, for example, 35 megapascals or more may be supplied in the fuel tank **50,** but the hydrogen gas after passing through the pressure reducing valve may be reduced to about 2 atmospheres or less.

Next, refer to FIG. **4****.** In addition to what is shown in FIG. **3****,** FIG. **4** shows a plurality of ECUs that communicate within the work vehicle **100** and a user interface **1.** Communication can be executed via CAN bus wiring and other similar communication pathways, which function as paths for electrical signals (thin solid lines). FIG. **4** also shows a cooling system to perform thermal management of components. Specifically, the paths of coolant (dotted lines) are schematically shown.

As mentioned above, the first and second DC-DC converters **81** and **82** are configured to output voltages of different magnitudes. ECUs are also provided for these first and second DC-DC converters **81** and **82** to control each voltage conversion circuit. These ECUs, like other ECUs, are applied the relatively low first voltage output by the first DC-DC converter **81.**

In the example of FIG. **4****,** the work vehicle **100** includes a cooling system in which coolant circulates via coolant pumps **31A** and **31B.** These coolant pumps **31A** and **31B** are provided inside the FC module **10.** The cooling system in this example includes a first radiator device **34A** responsible to cool the FC stack **11** and a second radiator device **34B** to cool other electrical equipment. The cooling system includes a flow path (first flow path) where coolant flows between the FC stack **11** and the first radiator device **34A.** Furthermore, this cooling system includes a flow path (second flow path) where coolant flows between electrical equipment including the motor **70** and the second radiator device **34B.** In the example of FIG. **4****,** for instance, a heater core **87** used to heat the cabin is provided, and the coolant flowing through the first radiator device **34A** flows through the heater core **87.**

The user interface **1** includes an operation device **2** such as an accelerator pedal (or accelerator lever), a main meter **4,** and an FC meter **6.** The work vehicle **100** shown in FIG. **4** further includes a controller **60** and a storage device **7.** The controller **60** includes a main ECU **3** and an FC system ECU **5.**

The main ECU **3** is connected to the FC system ECU **5,** the operation device **2,** the main meter **4,** and the storage device **7.** The main ECU **3** controls the overall operation of the work vehicle **100.** The main meter **4** may display various parameters that identify the travel state or operating state of the work vehicle **100.** The FC system ECU **5** controls the operation of the FC power generation system. The FC system ECU **5** is connected to the FC meter **6.** The FC meter **6** displays various parameters that identify the operating state of the FC power generation system.

The storage device **7** includes one or more storage media such as flash memory or magnetic disks. The storage device **7** stores various data generated by the main ECU **3** and FC system ECU **5.** The storage device **7** also stores computer programs that cause the main ECU **3** and FC system ECU **5** to perform desired operations. The computer programs may be provided to the work vehicle **100** via storage media (e.g., semiconductor memory or optical discs) or telecommunication lines (e.g., the Internet). The computer programs may be sold as commercial software.

The cells of the battery pack **80** are controlled by a Battery Management Unit (BMU). The BMU includes circuits and a CPU (Central Processing Unit) that perform voltage monitoring for each cell of the battery, monitoring of overcharging and over-discharging, and cell balance control. These circuits and CPU may be mounted on a battery controller board.

### 4. <Embodiments>

### (4.1. Basic Configuration of Work Vehicle)

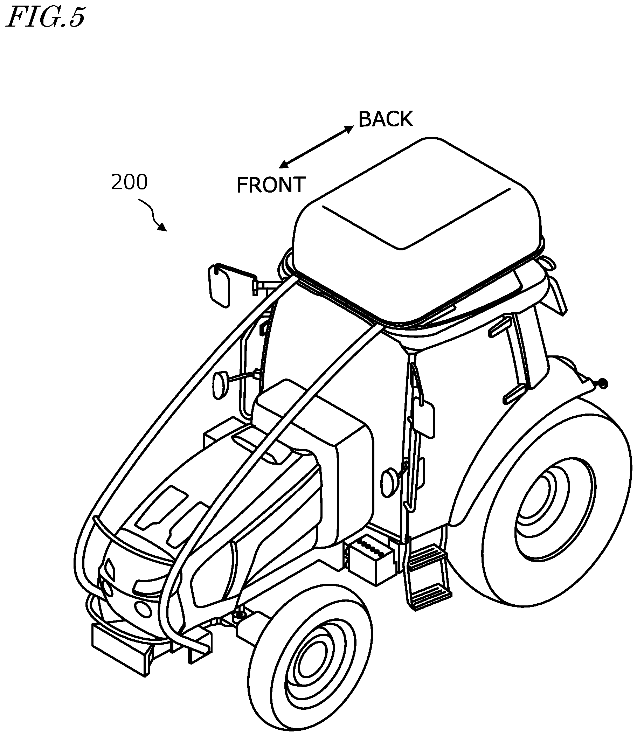

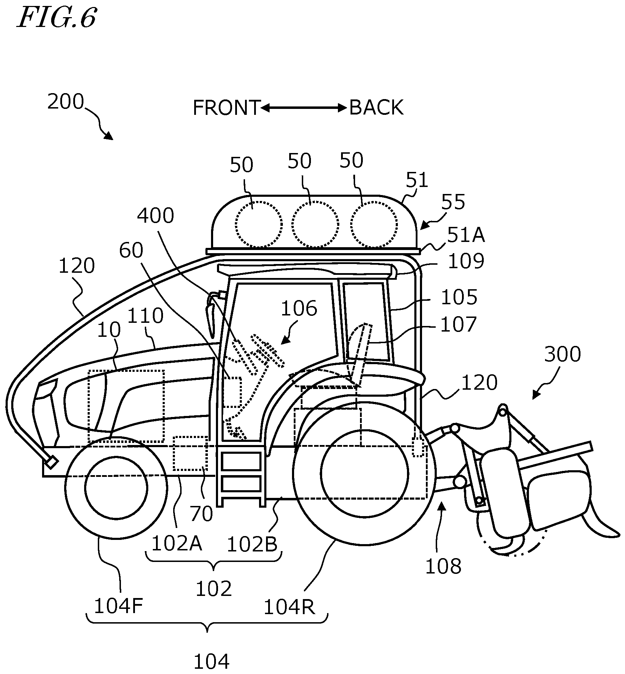

Next, referring to FIG. **5** and FIG. **6****,** a basic configuration of an embodiment of the work vehicle according to this disclosure will be described. FIG. **5** is a perspective view schematically showing an example of the configuration of the work vehicle **200** in this embodiment. FIG. **6** is a side view schematically showing an example of the configuration of the work vehicle **200** in this embodiment.

As shown in FIG. **6****,** the work vehicle **200** in this embodiment includes an FC module **10,** a fuel tank **50,** a motor **70,** a driver seat **107,** an operation terminal **400,** a controller **60,** a travel device including wheels **104,** and a vehicle frame **102.** The work vehicle **200** has a configuration similar to the configuration of the work vehicle **100** described with reference to FIG. **1****.** The controller **60** includes a main ECU **3** and an FC system ECU **5** as shown in FIG. **4****.** The controller **60** controls the operation of the work vehicle **200** by issuing commands to other ECUs such as the ECU **73** in the inverter device **72** and the ECU **42** in the FC module **10.** Each ECU includes a storage device (ROM) and may further include a processing circuit (or processor) such as an FPGA (Field Programmable Gate Array) and/or GPU (Graphics Processing Unit). Each ECU executes a computer program describing a group of instructions to execute at least one process stored in the storage device, either alone or in cooperation with other ECUs through communication, to perform desired operations.

The operation terminal **400** is a terminal for the user to execute operations related to the travel of the work vehicle **200** and the operation of the implement **300,** and is also referred to as a virtual terminal (VT). The operation terminal **400** may include a touch screen type display device and/or one or more buttons. The display device may be, for example, a display such as a liquid crystal display or an organic light-emitting diode (OLED) display. By operating the touch screen of the operation terminal **400,** users can perform various operations such as inputting information regarding the type of implement **300** and/or type of work, changing values of controlled variables for the work vehicle **200** such as vehicle speed or engine rotation speed, switching the power of the work vehicle on/off, and switching the implement on/off. The operation terminal **400** may be configured to be detachable from the work vehicle **200.** A user at a location away from the work vehicle **200** may control the operation of the work vehicle **200** by operating the detached operation terminal **400.**

The work vehicle **200** may further include at least one sensing device to sense the environment around the work vehicle **200,** and a processor to process sensor data output from the at least one sensing device. The sensing device may include, for example, a plurality of cameras, a LiDAR sensor, and a plurality of obstacle sensors. The sensor data output from the sensing device may be used for obstacle detection and positioning, for example. Various ECUs mounted on the work vehicle **200** may be configured to cooperatively perform calculations and control to achieve autonomous driving based on the sensor data output from the sensing device.

In this embodiment, the fuel tank **50** is supported by a mounting frame **120.** The mounting frame **120** is fixed to the vehicle frame **102** across the driver seat **107.** The fuel tank **50** is located above the driver seat **107.** However, the installation location of the fuel tank **50** is not limited to the illustrated example and may be, for example, inside the front housing **110.**

In this embodiment, the mounting frame **120** is an elongated structure, such as a pipe, fixed to the vehicle frame **102.** The mounting frame **120** includes two frames positioned on the left and right sides of the work vehicle **200** (refer to FIG. **5**). The front portion of the mounting frame **120** has a curved shape. However, the shape of the mounting frame **120** shown is just an example, and the shape of the mounting frame **120** is not limited to this example.

In this embodiment, the vehicle frame **102** includes a front frame **102A** that rotatably supports the front wheels **104F** and a transmission case **102B** that rotatably supports the rear wheels **104R.** One end (front end) of the mounting frame **120** is fixed to the front frame **102A.** The other end (rear end) of the mounting frame **120** is fixed to the transmission case **102B.** These fixations may be done by appropriate methods such as welding or bolt joining, depending on the material of the mounting frame **120.**The mounting frame **120** may be formed from metal, synthetic resin, carbon fiber, or composite materials such as carbon fiber reinforced plastic or glass fiber reinforced plastic. The transmission case **102B** includes a rear axle case, and the rear end of the mounting frame **120** may be fixed to the rear axle case. When the mounting frame **120** is formed from metal, a portion or entirety of its surface may be covered with synthetic resin.

As shown in FIG. **6****,** the work vehicle **200** includes a cabin **105** that surrounds the driver seat **107** between the vehicle frame **102** and the mounting frame **120.** The driver seat **107** is located in the rear portion of the interior of the cabin **105.** In front of the driver seat **107,** for example, a steering wheel **106** is provided to change the direction of the front wheels **104F.** The cabin **105** includes a cabin frame that defines its skeleton. A roof **109** is provided on the upper portion of the cabin frame. The cabin frame in this embodiment is a 4-pillar style. The cabin **105** is supported by the transmission case **102B** of the vehicle frame **102,** for example, via vibration-isolating mounts. The interface **1** explained with reference to FIG. **4** is provided inside the cabin **105.** Since the cabin **105** does not directly support the fuel tank **50,** there is no need to specially increase its strength, and a cabin that has been used in conventional tractors can be adopted.

The work vehicle **200** includes a placement platform **51A** that connects the left frame **120** and the right frame **120.** The fuel tank **50** can be positioned on the placement platform **51A.** When there are a plurality of fuel tanks **50,** the plurality of fuel tanks **50** may be provided in a fuel tank module **55.** As shown in FIG. **6****,** the fuel tank module **55** includes a tank case **51** that houses a plurality of fuel tanks **50.** The left and right mounting frames **120** may be connected to each other by structural elements other than the placement platform **51A.**

A linkage device **108** is provided at the rear end of the transmission case **102B,** which forms the rear portion of the vehicle frame **102.** The linkage device **108** includes, for example, a three-point support device (referred to as a "three-point link" or "three-point hitch"), a PTO shaft, a universal joint, and a communication cable. The implement **300** can be attached to or detached from the work vehicle **200** using the linkage device **108.** The linkage device **108** can, for example, raise and lower the three-point link by a hydraulic device to change the position or posture of the implement **300.** Additionally, power can be transmitted from the work vehicle **200** to the implement **300** via the universal joint. The work vehicle **200** can execute predetermined work (agricultural task) with the implement **300** while pulling the implement **300.** The linkage device **108** may be provided on the front portion of the vehicle frame **102,** in which case the implement **300** can be connected to the front of the work vehicle **200.**

The implement **300** may include, for example, a drive device, a controller, and a communication device. The drive device performs operations necessary for the implement **300** to execute predetermined tasks. The drive device includes devices appropriate for the application of the implement **300,** such as hydraulic devices, electric motors, or pumps. The controller controls the operation of the drive device. The controller causes the drive device to perform various operations in response to signals transmitted from the work vehicle **200** via the communication device. Signals corresponding to the state of the implement **300** may also be transmitted from the communication device to the work vehicle **200.**

The implement **300** shown in Fig. **6** is a rotary tiller, but the implement **300** is not limited to a rotary tiller. For example, any implement such as a seeder, a spreader, a transplanter, a mower, rake, baler, harvester, sprayer, or harrow can be connected to and used with the work vehicle **200.**

The work vehicle **200** shown in Fig. **6** is capable of manned operation, but it may also be configured only for unmanned operation. In that case, components necessary only for manned operation, such as the cabin **105,** steering wheel **106,** and driver seat **107,** may not be provided on the work vehicle **200.** An unmanned work vehicle **200** can travel autonomously or by remote control by a user.

### (4.2. Discharge Processing at Operation Stop)

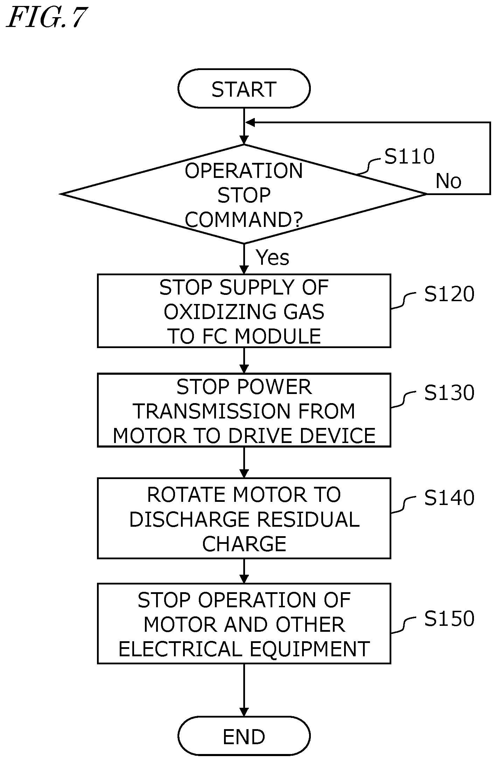

The controller **60** of the work vehicle **200,** when a command to stop the operation of the work vehicle **200** is issued, stops the operation of the FC module **10** and performs a discharge process to consume residual charge in the circuitry within the system. The following describes an example of this process with reference to Fig. **7****.**

Fig. **7** is a flowchart showing an example of the operation of the controller **60** when stopping the operation of the work vehicle **200.** The controller **60** stops the operation of the work vehicle **200** by executing the operations of steps **S110 to S150** shown in Fig. **7** during the operation of the work vehicle **200.**

In step **S110,** the controller **60** determines whether an operation stop command has been issued or not. The operation stop command is a command to stop power supply to each electrical equipment of the work vehicle **200** and power generation by the fuel cell. The operation stop command may be issued, for example, when a user turns off a power switch (e.g., an ignition switch) included in the operation device **2.** When the operation stop command is issued, the process proceeds to step **S120.**

In step **S120,** the controller **60** stops the supply of oxidizing gas (e.g., air) to the FC module **10.** Specifically, the FC system ECU **5** of the controller **60,** in response to the operation stop command, instructs the ECU **42** of the FC module **10** to close the shut-off valve **17** (see Fig. **2**). Accordingly, the flow of oxidizing gas into the FC stack **11** is blocked and power generation is stopped. In this embodiment, the supply of oxidizing gas to the FC stack **11** is stopped, but the system may be configured to stop the supply of fuel (hydrogen gas in this embodiment) instead. In step **S120,** the controller **60** also stops the operation of the air compressor **12.**

Next, in step **S130,** the controller **60** halts power transmission from the motor **70** to the traveling device. Specifically, the main ECU **3** of the controller **60** switches a plurality of clutches in the power transmission system **74** from the engaged state to the disengaged state, so as to halt power transmission from the motor **70** to the traveling device including the axles and wheels **104.** In this process, the main ECU **3** may maintain power transmission from the motor **70** to the PTO shaft **76** by keeping the PTO clutch in the engaged state, or may stop power transmission from the motor **70** to the PTO shaft **76** by switching the PTO clutch to the disengaged state.

Next, in step **S140,** the controller **60** rotates the motor **70** to discharge residual electric charge in the circuitry connected to the motor **70.** Specifically, the main ECU **3** in the controller **60** consumes the residual charge by issuing a command to the ECU **73** in the inverter device **72** to rotate the motor **70.** In this process, although the motor **70** rotates, the traveling device remains stopped because power transmission from the motor **70** to the traveling device is stopped. If power transmission from the motor **70** to the PTO shaft **76** is maintained, the PTO shaft **76** also rotates with the rotation of the motor **70.** Rotating the PTO shaft **76,** a larger amount of energy can be consumed compared to when the PTO shaft **76** is not rotated. This shortens the time required for discharge. On the other hand, when power transmission from the motor **70** to the PTO shaft **76** is stopped, the PTO shaft **76** does not rotate even when the motor **70** rotates. In this case, while the energy consumed is relatively small, the implement **300** connected to the PTO shaft **76** can be prevented from being unnecessarily driven when stopping the operation of the work vehicle **200.**

When the discharge of residual charge is completed, the process proceeds to step **S150,** and the controller **60** stops the operation of the motor **70** and other electrical equipment. Accordingly, the work vehicle **200** stops operation.

The discharge process described above consumes the residual charge in the circuitry connected to the motor **70.** The circuitry connected to the motor **70** includes, for example, the bridge circuit in the inverter device **72** shown in Fig. **4****,** the boost circuit **40,** and the DC-DC converters **81** and **82.** The boost circuit **40** functions as a boost converter that boosts the DC voltage generated by the FC stack **11.** The bridge circuit in the inverter device **72** functions as an inverter that converts the DC voltage output from the boost converter into AC voltage and supplies it to the motor **70.** These circuits may include a plurality of capacitors. The discharge process enables discharging the residual charge remaining in these capacitors, thus preventing unnecessary charge from remaining in the circuits when the work vehicle **200** is in a power-off state.

In the discharge process of step **S140,** the controller **60** may perform discharge of residual charge not only by rotating the motor **70** but also by operating other electrical equipment or charging the battery **80.** For example, after stopping the supply of fuel or oxidizing gas to the FC module **10,** the controller **60** may rotate an air cooling fan in the radiator device **34A** to cool the FC stack **11** shown in Fig. **4** to discharge residual charge in the circuits within the FC module **10.** By rotating not only the motor **70** but also the cooling fan to cool the FC module **10,** the discharge of residual charge in the FC module **10** can be effectively executed. Additionally, in response to the operation stop command, the controller **60** may discharge residual charge remaining in the DC-DC converter **81** and other components by rotating a cooling fan in the radiator device **34B** to cool electrical equipment other than the FC stack **11.** Furthermore, the controller **60** may be configured to consume residual charge more efficiently by operating a hydraulic system including a hydraulic pump. However, when operating the hydraulic pump, a hydraulic lock mechanism may be used to prevent the lift arm in the linkage device **108** and other components from operating.

As shown in Figs. **3** and **4****,** the work vehicle **200** according to this embodiment may include a first switch **R1** provided in the current path between the FC module **10** and the motor **70.** The work vehicle **200** may further include a second switch **R2** provided in the current path between the battery **80** and the motor **70.** The first switch **R1** and the second switch **R2** may be, for example, relays. The on/off control of each of the first switch **R1** and the second switch **R2** may be performed by the main ECU **3** in the controller **60.** By turning off the first switch **R1,** power supply from the FC module **10** to the motor **70** is cut off. By turning off the second switch **R2,** power supply from the battery **80** to the motor **70** is cut off.

In response to the operation stop command, the controller **60** may turn off the first switch **R1** and then may perform discharge of residual charge by rotating the motor **70** or operating other electrical equipment. In this process, the controller **60** may operate other electrical equipment such as cooling fans in the radiator devices **34A** and **34B.** By turning off the first switch **R1,** discharge of residual charge can be executed while cutting off power supply from the FC module **10** to the motor **70.** The controller **60** may turn off both the first and second switches in response to the operation stop command, and then may also perform discharge of residual charge by rotating the motor **70** or operating other electrical equipment. This allows the discharge of residual charge to be performed while the power supply from the FC module **10** and the battery **80** to the motor **70** is cut off.

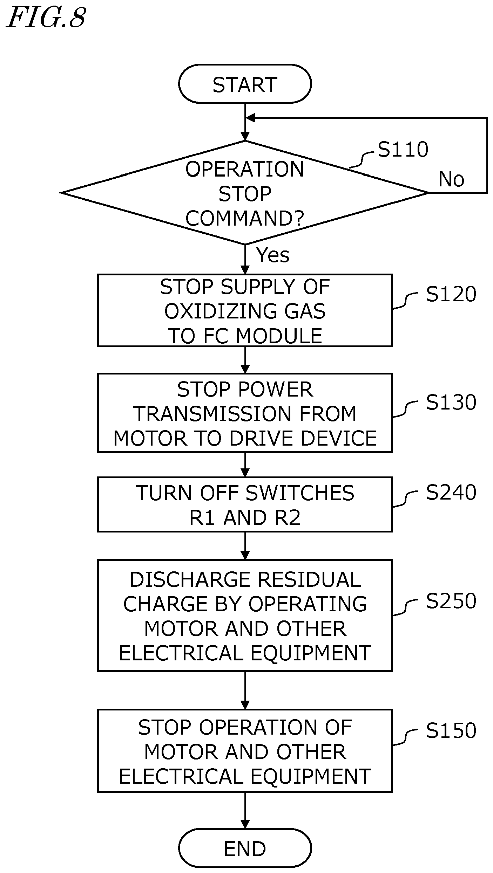

Fig. **8** is a flowchart showing an example of an operation that performs discharge of residual charge by operating the motor and other electrical components with switches **R1** and **R2** turned off. The flowchart shown in Fig. **8** is similar to that in Fig. **7****,** except that step **S140** in Fig. **7** is replaced with steps **S240** and **S250.** In the example of Fig. **8****,** after stopping power transmission from the motor **70** to the traveling device in step **S130,** the process proceeds to step **S240,** where the controller **60** turns off the first switch **R1** and the second switch **R2.** Next, in step **S250,** the controller **60** operates the motor **70** and other electrical equipment (e.g., cooling fans in radiator devices **34A** and **34B,** hydraulic system, and/or electric pumps, etc.) to execute discharge of residual charge. This operation allows efficient performance of discharge in the peripheral circuits of the motor **70** and the circuits within the FC module **10.**

The controller **60** may change the discharge process depending on whether an implement **300** is connected to the PTO shaft **76** or not. For example, when an implement **300** is connected to the PTO shaft **76,** the controller **60** may rotate the motor **70** while stopping power transmission from the motor **70** to the PTO shaft **76,** and when no implement is connected to the PTO shaft **76,** it may rotate the motor **70** while maintaining power transmission from the motor **70** to the PTO shaft **76.** Such control allows appropriate switching of the discharge method depending on the presence or absence of the implement **300.**

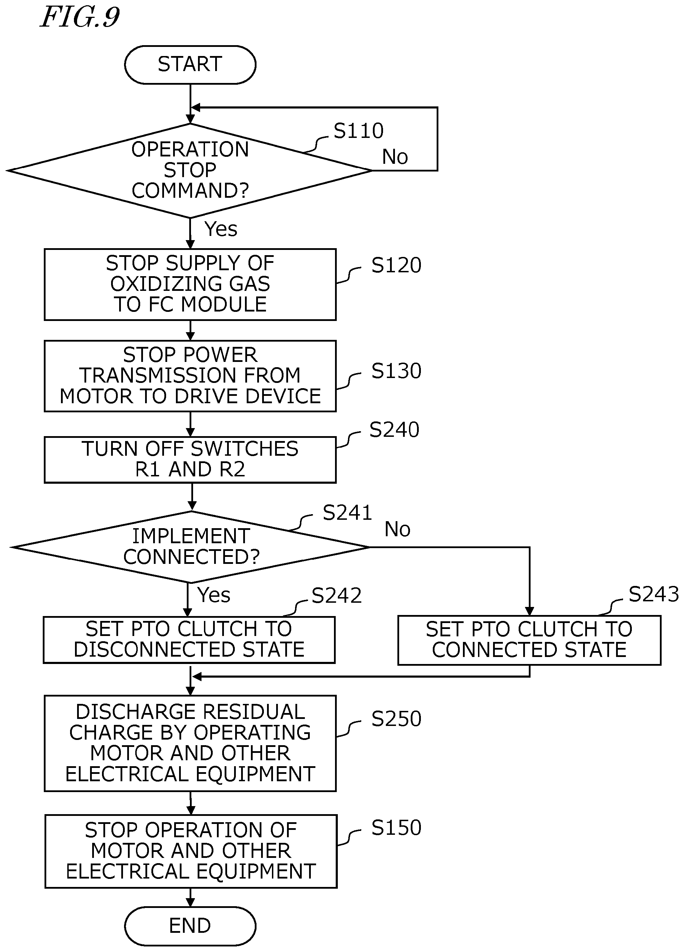

Fig. **9** is a flowchart showing an example of an operation that changes the discharge process depending on whether an implement **300** is connected to the PTO shaft **76** or not. The flowchart shown in Fig. **9** is the same as the example shown in Fig. **8****,** except that steps **S241, S242,** and **S243** are added between steps **S240** and **S250** in Fig. **8****.** In the example of Fig. **9****,** after turning off the switches **R1** and **R2** in step **S240,** the controller **60** determines whether an implement is connected to the PTO shaft **76** or not. Whether an implement **300** is connected to the PTO shaft **76** may be determined based on, for example, a signal transmitted from the implement **300** to the work vehicle **200.** When an implement is connected, the process proceeds to step **S242.** When an implement is not connected, the process proceeds to step **S243.**

In step **S242,** the controller **60** sets the PTO clutch to a disengaged state. This stops power transmission from the motor **70** to the PTO shaft **76.**

In step **S243,** the controller **60** sets the PTO clutch to an engaged state. This maintains power transmission from the motor **70** to the PTO shaft **76.**

In step **S250** thereafter, the controller **60** operates the motor **70** and other electrical components to perform discharge of residual charge. Then, in step **S150,** the operation of the motor **70** and other electrical equipment is stopped. This stops the operation of the work vehicle **200.**

According to the control shown in FIG. **9****,** when the implement **300** is connected to the work vehicle **200,** unnecessary activation of the implement **300** due to the rotation of the PTO shaft **76** can be avoided when the work vehicle **200** is stopped. On the other hand, when the implement **300** is not connected to the work vehicle **200,** rotating the PTO shaft increases energy consumption, allowing the discharge to be performed more efficiently. Thus, an appropriate discharge method can be selectively executed depending on whether the implement **300** is connected.

In the above embodiments, the discharge process is performed when a command to turn off the power of the work vehicle **100** is issued. The discharge process may be performed not only at the timing of turning off the power, but also, for example, when a command for idle stop (temporary stop of the FC module **10**) is issued. Performing the discharge process during the idle stop can suppress degradation of the fuel cell.

The configurations and operations of the above embodiments are exemplary, and the present disclosure is not limited to the above embodiments. For example, various embodiments may be appropriately combined to configure other embodiments.

As described above, the present disclosure includes work vehicles, controllers for work vehicles, and control methods for work vehicles described in the following items.

[Item 1] A work vehicle comprising:
a fuel cell module including a fuel cell stack;
at least one fuel tank to store fuel to be supplied to the fuel cell stack;
a motor connected to the fuel cell module;
a travel device drivable by the motor;
a power take-off shaft drivable by the motor and configured to connect to an implement; and
a controller configured,
in response to an operation stop command, to stop supply of the fuel or oxidizing gas to the fuel cell stack, and thereafter to rotate the motor with power transmission from the motor to the travel device halted, so as to discharge residual electric charge in circuitry connected to the motor.

[Item 2] The work vehicle according to Item 1, wherein the controller performs discharging by rotating the motor while maintaining power transmission from the motor to the power take-off shaft.

[Item 3] The work vehicle according to Item 1, wherein the controller performs discharging by rotating the motor with power transmission from the motor to the power take-off shaft halted.

[Item 4] The work vehicle according to any one of Items 1 to 3, further comprising:
a first switch provided on a current path between the fuel cell module and the motor,
wherein the controller, in response to the operation stop command, turns off the first switch and thereafter performs discharging by rotating the motor.

[Item 5] The work vehicle according to Item 4, further comprising:
a battery to be connected to the fuel cell module and the motor; and
a second switch provided on a current path between the battery and the motor,
wherein the controller, in response to the operation stop command, turns off the first switch and the second switch, and thereafter performs discharging by rotating the motor.

[Item 6] The work vehicle according to any one of Items 1 to 3, wherein the circuitry includes:
a boost converter configured to boost a DC voltage generated by the fuel cell stack; and
an inverter configured to convert the DC voltage output from the boost converter to an AC voltage and supply the AC voltage to the motor.

[Item 7] The work vehicle according to any one of Items 1 to 3, further comprising:
a cooling fan configured to cool the fuel cell module,
wherein the controller, after stopping the supply of the fuel or oxidizing gas to the fuel cell module in response to the operation stop command, further rotates the cooling fan to discharge residual electric charge in the fuel cell module.

[Item 8] The work vehicle according to any one of Items 1 to 3, wherein the work vehicle is an agricultural machine.

[Item 9] A controller for a work vehicle that includes a fuel cell module with a fuel cell stack, at least one fuel tank to store fuel to be supplied to the fuel cell stack, a motor connected to the fuel cell module, a travel device drivable by the motor, and a power take-off shaft drivable by the motor and configured to connect to an implement, the controller configured, in response to an operation stop command, to stop supply of the fuel or oxidizing gas to the fuel cell module, and thereafter to rotate the motor with power transmission from the motor to the travel device halted, so as to discharge residual electric charge in circuitry connected to the motor.

[Item 10] A control method for a work vehicle that includes a fuel cell module with a fuel cell stack, at least one fuel tank to store fuel to be supplied to the fuel cell stack, a motor connected to the fuel cell module, a travel device drivable by the motor, and a power take-off shaft drivable by the motor and configured to connect to an implement, the control method comprising:
in response to an operation stop command, stopping supply of the fuel or oxidizing gas to the fuel cell module; and
after stopping the fuel supply, rotating the motor with power transmission from the motor to the travel device halted, so as to discharge residual charge in circuitry connected to the motor.

### INDUSTRIAL APPLICABILITY

The techniques in the present disclosure are applicable to work vehicles such as agricultural tractors, harvesters, rice planters, vehicles for crop management, and vegetable transplanters.

### REFERENCE SIGNS LIST

**1:** User interface, **2:** Operation device, **3:** Main ECU, **4:** Main meter, **5:** FC system ECU, **6:** FC meter, **7:** Storage device, **10:** Fuel cell module, **11:** FC stack, **34:** Radiator device, **40:** Boost circuit, **42:** Control device (ECU), **50:** Fuel tank, **51:** Tank case, **60:** Control device, **70:** Motor, **71:** Output shaft, **72:** Inverter device, **74:** Power transmission system, **76:** Power take-off (PTO) shaft, **80:** Battery pack, **81:** First DC-DC converter, **82:** Second DC-DC converter, **83:** Storage battery, **85:** Air conditioning compressor, **86:** Heater, **100:** Work vehicle, **102:** Vehicle frame, **102A:** Front frame, **102B:** Transmission case, **104:** Wheel, **104F:** Front wheel, **104R:** Rear wheel, **107:** Driver seat, **120:** Mounting frame

## Claims

1. A work vehicle comprising:
a fuel cell module including a fuel cell stack;
at least one fuel tank to store fuel to be supplied to the fuel cell stack;
a motor connected to the fuel cell module;
a travel device drivable by the motor;
a power take-off shaft drivable by the motor and configured to connect to an implement; and
a controller configured to,
in response to an operation stop command, stop supply of the fuel or oxidizing gas to the fuel cell stack, and thereafter rotate the motor with power transmission from the motor to the travel device halted, so as to discharge residual electric charge in circuitry connected to the motor.

2. The work vehicle according to claim 1, wherein the controller performs discharging by rotating the motor while maintaining power transmission from the motor to the power take-off shaft.

3. The work vehicle according to claim 1, wherein the controller performs discharging by rotating the motor with power transmission from the motor to the power take-off shaft halted.

4. The work vehicle according to any one of claims 1 to 3, further comprising:
a first switch provided on a current path between the fuel cell module and the motor,
wherein the controller, in response to the operation stop command, turns off the first switch and thereafter performs discharging by rotating the motor.

5. The work vehicle according to claim 4, further comprising:
a battery to be connected to the fuel cell module and the motor; and
a second switch provided on a current path between the battery and the motor,
wherein the controller, in response to the operation stop command, turns off the first switch and the second switch, and thereafter performs discharging by rotating the motor.

6. The work vehicle according to any one of claims 1 to 3, wherein the circuitry includes:
a boost converter configured to boost a DC voltage generated by the fuel cell stack; and
an inverter configured to convert the DC voltage output from the boost converter to an AC voltage and supply the AC voltage to the motor.

7. The work vehicle according to any one of claims 1 to 3, further comprising:
a cooling fan configured to cool the fuel cell module,
wherein the controller, after stopping the supply of the fuel or oxidizing gas to the fuel cell module in response to the operation stop command, further rotates the cooling fan to discharge residual electric charge in the fuel cell module.

8. The work vehicle according to any one of claims 1 to 3, wherein the work vehicle is an agricultural machine.

9. A controller for a work vehicle that includes a fuel cell module with a fuel cell stack, at least one fuel tank to store fuel to be supplied to the fuel cell stack, a motor connected to the fuel cell module, a travel device drivable by the motor, and a power take-off shaft drivable by the motor and configured to connect to an implement, the controller configured, in response to an operation stop command, to stop supply of the fuel or oxidizing gas to the fuel cell module, and thereafter to rotate the motor with power transmission from the motor to the travel device halted, so as to discharge residual electric charge in circuitry connected to the motor.

10. A control method for a work vehicle that includes a fuel cell module with a fuel cell stack, at least one fuel tank to store fuel to be supplied to the fuel cell stack, a motor connected to the fuel cell module, a travel device drivable by the motor, and a power take-off shaft drivable by the motor and configured to connect to an implement, the control method comprising:
in response to an operation stop command, stopping supply of the fuel or oxidizing gas to the fuel cell module; and
after stopping the fuel supply, rotating the motor with power transmission from the motor to the travel device halted, so as to discharge residual charge in circuitry connected to the motor.
